# EUROPEAN PATENT SPECIFICATION

(11) **EP 2 542 011 B1**
(45) Date of publication and mention of the grant of the patent: **05.08.2020**
(21) Application number: 12174512.9
(22) Date of filing: 29.06.2012
(51) Int. Cl.: H04B 1/7156, H04W 74/08, H04W 72/02, H04W 72/04, H04W 84/18

(54) **Listen before talk frequency agile radio synchronization**
Frequenzagile Listen-before-talk Funksynchronisierung
Synchronisation radio à agilité de fréquence (écouter avant de parler)

(30) Priority: 01.07.2011 US 201113175436
(43) Date of publication of application: 02.01.2013
(73) Proprietor: DIGI INTERNATIONAL INC., Minnetonka, MN 55343 (US)
(72) Inventor: Ferguson, Helaman David Pratt, Orem, UT 84097 (US)
(74) Representative: Hanna Moore + Curley

(56) References cited:
- EP-A2- 1 111 805
- US-A- 5 471 503
- GERARD CERVELLÓ ET AL: "IEEE P802.11 Wireless LANs Dynamic Channel Selection (DCS) Scheme for 802.11 ; 01958E-Dynamic Channel Selection Scheme for 802.11", IEEE DRAFT; 01958E-DYNAMIC CHANNEL SELECTION SCHEME FOR 802.11, IEEE-SA, PISCATAWAY, NJ USA, vol. 802.11, 12 July 2000 (2000-07-12), pages 1-7, XP068091567, [retrieved on 2000-07-12]
- "Electromagnetic compatibility and Radio spectrum Matters (ERM); Short Range Devices (SRD); Radio equipment to be used in the 25 MHz to 1 000 MHz frequency range with power levels ranging up to 500 mW; Part 1: Technical characteristics and test methods", EUROPEAN STANDARD (TELECOMMUNICATIONS SERIES), EUROPEAN TELECOMMUNICATIONS STANDARDS INSTITUTE (ETSI), 650, ROUTE DES LUCIOLES ; F-06921 SOPHIA-ANTIPOLIS ; FRANCE, no. V2.3.1, 1 December 2009 (2009-12-01), XP014044841,

## Description

### Field

The invention relates generally to wireless communication signals, and more specifically in one embodiment to a listen before talk (LBT) frequency agile radio synchronization.

### Background

Many of today's computers, cellular telephones, and other such devices rely on wireless communication to exchange information with other devices, such as to surf the Internet, send and receive email, and communicate audio and video. Still other devices wirelessly communicate with one another to exchange information such as to manage a fleet of vehicles or other assets, to monitor security information or utility usage in a building, or to control industrial systems.

One such wireless example is the Bluetooth technology that enables a cell phone user to associate and use an earpiece in what is sometimes referred to a personal area network or PAN. Another example is a mesh network, in which a number of devices work together to form a mesh, such that data can be sent from a source device to a destination device via other devices in the mesh network.

Such networks are often controlled by a gateway or coordinator device that acts as an interface between the mesh network and the Internet. Many networks such as these are large, comprising tens or hundreds of nodes spread out over a wide area. Further, a variety of node and gateway devices are often employed in complex network installations, including devices from a variety of manufacturers and that perform a variety of different monitoring and control functions. The variety of smart energy, fleet management, medical device networking, and other sensors, controllers, actuators, meters in a network arc further often distributed across a wide area, making coordination of communication between wireless devices an important factor in reliable network operation, resulting in technologies such as frequency hopping to avoid interference and ensure reliable communication.

Some wireless radio networked devices therefore use a master/slave configuration between two communicating devices, where the device designated the master is responsible for coordinating a switch to a new frequency so that both devices change to the same frequency at the same time. This requires some coordination between the two devices, such as to negotiate which radio is the master and which is the slave, and to coordinate the channel pattern between radios.

It is desired to manage synchronization of frequency agile radios such as these efficiently and reliably.

US5471503 discloses a scanning method for receiving a signal in a frequency hopped communication system that transmits a packet having N segments that are encoded with an error correction code that allows recovery of a packet even if e segments are erasures. A receiving station continuously scans the first p (1</=p</=e+1) channels, testing each channel for the existence of a transmission. If detected, a segment is received, and then the receiving station sequences through the remaining channels, receiving the segments if possible, and then applying error correction to the complete transmission. This technique of scanning the first several channels, receiving the first unimpaired segment, and thereby gaining the ability to recover all unimpaired segments enables the full theoretical power of a coded, slow frequency hopped system to be realized.

EP1111805 discloses a frequency-agile receiver arranged to perform the steps of: sweeping a radio spectrum; determining if a pre-determined carrier preamble signal is present in a radio signal; detecting the pre-determined carrier preamble signal receiving responsive to detecting the pre-determined carrier preamble signal message-data; and continuing, responsive to not detecting the pre-determined carrier preamble signal to sweep the radio spectrum, the transmitted signal comprising a pre-determined carrier preamble signal followed by a message-data signal. The above preamble can be in the form of a code.

### Summary

The present application provides methods and a radio frequency transmitter in accordance with the claims which follow.

### Brief Description of the Figures

Figure 1 illustrates an example listen-before talk frequency agile radio network, consistent with an example embodiment of the invention.
Figure 2 is a flowchart illustrating listen-before-talk and frequency switching in a radio in conjunction with a long preamble and scanning mechanism, consistent with an example embodiment of the invention.
Figure 3 shows a flowchart of a method of operating a frequency agile radio using listen-before-talk, consistent with an example embodiment of the invention.
Figure 4 shows example preambles and a preamble table, consistent with an example embodiment of the invention.

### Detailed Description

In the following detailed description of example embodiments of the invention, reference is made to specific examples by way of drawings and illustrations. These examples are described in sufficient detail to enable those skilled in the art to practice the invention, and serve to illustrate how the invention may be applied to various purposes or embodiments. Other embodiments of the invention exist and are within the scope of the invention, and logical, mechanical, electrical, and other changes may be made without departing from the subject or scope of the present invention. Features or limitations of various embodiments of the invention described herein, however essential to the example embodiments in which they are incorporated, do not limit the invention as a whole, and any reference to the invention, its elements, operation, and application do not limit the invention as a whole but serve only to define these example embodiments. The following detailed description does not, therefore, limit the scope of the invention, which is defined only by the appended claims.

As discussed in the Background, traditional frequency agile radios that are operable to hop or change frequencies rely on designation of one radio as a master and at least one other as a slave, so that the master can coordinate what the new frequency will be and when the frequency change will take place among the radios.

In such a system, the master sends out a "beacon" signal identifying itself as the master, for one or more slave radios to receive and lock on to. Such radios typically perform such functions upon startup, including slave radios monitoring a known frequency for beacon signals from a designated master radio. The master and slave device communicate or exchange information indicating the next frequency or channel used, the time of frequency switching, or a channel schedule to ensure that they operate on the same frequencies or channels at the same time.

In a more detailed example, a Frequency Hopping Spread Spectrum (FHSS) is employed to spread transmitted energy by dividing the available spectrum into different channels or frequency bands, and switching between them using a pseudorandom sequence shared between the transmitter and one or more receivers. The master or controller node periodically sends out a beacon signal as described above to welcome new radios to the network, enabling the new radios to synchronize to the transmitter and receive information such as frequency hopping information and other transmitted data.

Listen-Before-Talk or LBT radios present challenges to a frequency agile radio scheme such as the FHSS system described above or other master-slave radio devices, as a radio such as a master radio device may be prohibited from transmitting on a channel if the channel is occupied at a time designated for a frequency change. This can be addressed in some examples by features such as redundant communication between radios or algorithms providing recovery from a failed frequency change, but such schemes take additional time or resources to manage such a problem.

Some example embodiments of the invention therefore seek to provide an improved frequency change system, employing listen-before-talk radios in a frequency agile radio system. In a more detailed example, a transmitter uses a preamble that is slightly longer in time than the time it takes for receivers to scan all channels and lock on to the desired channel once found. This enables receivers to scan all channels to find the preamble, and lock on to the new channel to receive subsequent transmitted data while the preamble is being transmitted without prior knowledge of the transmitter's new frequency. In a further example, the preamble data transmitted comprises encoded data that the receivers can read and recognize as addressed to the intended receiver, ensuring that the transmitter reestablishes a communications link with the intended receiver or receivers.

The use of scanning radios in a frequency agile listen-bef ore-talk radio environment further enables the transmitting radio to determine whether a channel is occupied or has a high level of noise or interference before changing frequencies, such that the transmitter can simply select another frequency or channel and transmit once it has been determined that a channel is available.

In some radio applications, duty cycle limits are imposed on transmitters to ensure that no one transmitter consumes more available radio resources than is desired. Examples include the European 868 MHz band, in which a duty cycle limit of 1% is imposed between 865 and 868 MHz, and a 0.1% duty cycle is imposed over the broader 863 to 870 MHZ frequency range. Other limitations impose limits on time spent broadcasting on a certain frequency or channel, such as limiting transmit time within any 200kHz band to 100 seconds within a one hour period.

Use of listen-before-talk exempts a transmitter from this duty cycle limitation, as it is presumed that the listen-before-talk system enforces some fairness in use of available time on a limited frequency spectrum. This makes 868MHz radios employing listen-before-talk technologies desirable in that they are not subject to the duty cycle limitations imposed to ensure other devices an opportunity to use the same frequency channels.

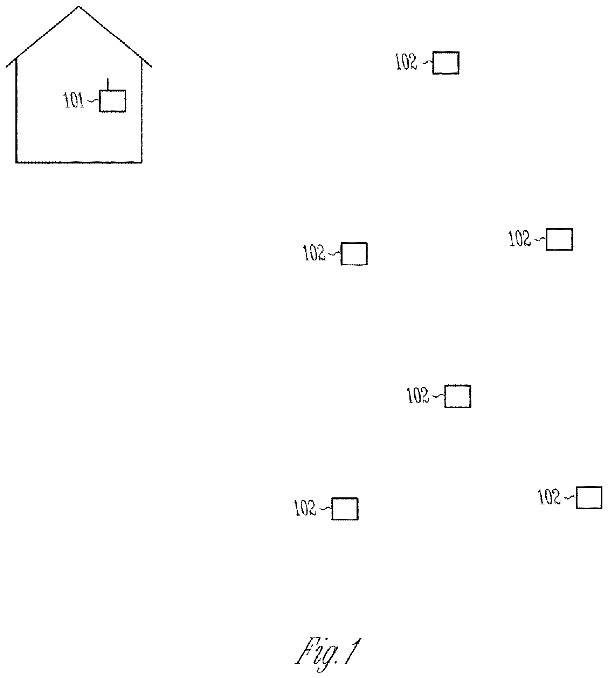

Figure 1 illustrates an example listen-before talk frequency agile radio network, consistent with an example embodiment of the invention. Here, a radio 101 is coupled to a control system, such as to manage security in a facility, to monitor utility usage in a facility, or for another such function. In a more detailed example, radio 101 is a controller operable to communicate with ground moisture sensors and sprinkler system actuators as shown at 102.

The radios in this example operate on the 868 MHz band, and employ listen-before-talk to avoid the European duty cycle limitations imposed on radios in this band that do not employ listen-before-talk. The radios are also frequency agile, in that they are operable to change from one frequency to another for reasons such as to avoid interference, and to avoid interfering with other radios or consuming excessive resources on a given frequency or channel.

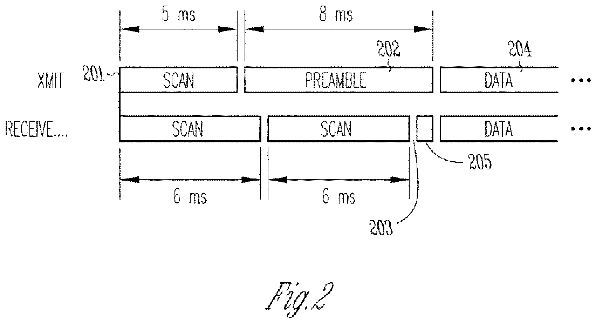

Employing listen-before-talk and frequency switching in the same radio is addressed in some embodiments of the invention in conjunction with a long preamble and scanning mechanism, as illustrated in Figure 2. Here, a transmitter wishing to establish communication with one or more receivers begins by scanning available channels for a free channel that it can use for transmission, evaluating eligible channels for traffic and noise in various embodiments. In a more detailed example, the transmitter scans multiple channels at a time, and monitors each channel for a given period such as five milliseconds as shown at 201 to ensure that the channel is clear and to establish a noise level on the channel.

When a channel has been determined to be available and has a suitably low noise level for communication, the transmitter sends a preamble, as shown at 202. Although the preamble here is shown to be 8 milliseconds in time, a variety of other preamble formats and lengths will be suitable for alternate embodiments of the invention.

A receiver is constantly scanning the available channels or frequency bands, which in this 868 MHz example includes scanning each of 34 available channels during a 6 millisecond period as shown at 203. Because the preamble is transmitted for longer than the amount of time needed for the receiver to scan each channel and read data encoded in the preamble identifying the transmitter or the network, the receiver can join the network or link to the transmitter during a single transmission of the preamble and be ready to receive data at the conclusion of the preamble as shown at 204.

Once the receiver has found the transmitter as a result of repeatedly scanning the channel space of the radios, the scanning stops as shown at 203, the remaining portion of the preamble is received at 205, and data is exchanged as shown at 204. Eventually the data link between the transmitter and receiver is dropped, such as at the conclusion of the transmitter's message, and the receiver will resume scanning each available channel for another transmission as shown at 203. Other embodiments include alternate or additional features, such as a message acknowledgment from the receiver to the transmitter at the conclusion of the data.

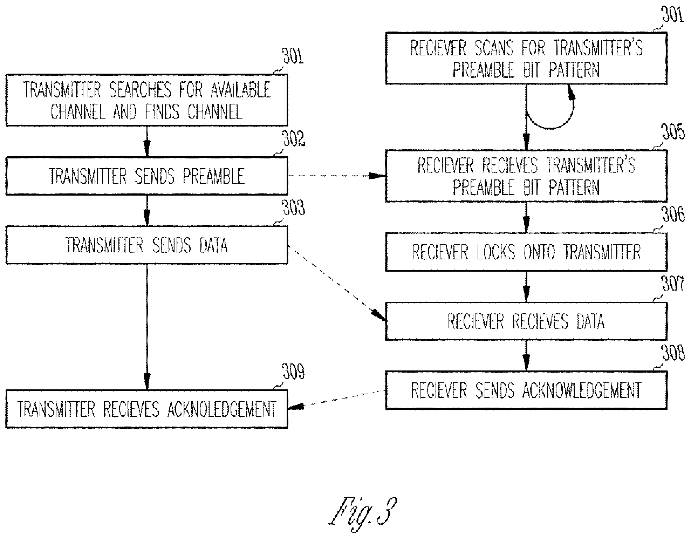

Figure 3 shows a flowchart of a method of operating a frequency agile radio using listen-before-talk, consistent with an example embodiment of the invention. Here, the transmitter operation is shown on the left side of the illustration, and the receiver operation is shown on the right side. The transmitter first searches for an available channel, and finds a channel that is both free and has a suitably low noise or interference level at 301. Once a channel is selected, the transmitter sends a preamble at 302, that is at least slightly longer in time than the time it takes the receiver to scan all available channels on which the transmitter may be operating. This time is in some embodiments a relatively short time, such as under 20ms, 10ms, 5ms, or 1ms. The transmitter then sends the data, as shown at 303. The preamble in another example identifies the intended receiver, by incorporating information marking the message as intended for the receiver or as a broadcast message. In further embodiments, the transmitter receives confirmation from the receiver that the data has been successfully received before transmitting further data, to ensure reliable communication between the transmitter and the receiver.

The receiver scans for a transmitter's preamble pattern at 304, in some embodiments limited to only a recognized preamble pattern of a specific receiver such as the receiver's unicast and broadcast preambles that are a part of a specific radio network or of a specific radio device. The scanning continues until the receiver finds the transmission being searched for, by receiving the transmitter's recognized preamble bit pattern at 305. As shown by the dashed lines, this happens as a result of the transmitter selecting a channel and transmitting the preamble as shown at 302.

The receiver then locks on to the channel or frequency band on which the preamble was found at 306, and receives data at 307. Eventually, the transmitter will have sent its message and will send an acknowledgment at 308, which is received by the transmitter at 309, and the method illustrated will start over again. In still other embodiments, the transmitter changes frequency after a fixed amount of time, when interference or other traffic is detected on the chosen band, based on a pseudorandom schedule, or through another triggering mechanism, resulting in the method illustrated in Figure 3 starting over again with the transmitter seeking a new channel at 301.

Rapid scanning of the available channels such that the receiver can scan each channel or frequency band for the preamble during the time the preamble is being sent from the transmitter provides for rapid recognition of the transmitter's new frequency without needing to explicitly communicate or coordinate the new frequency between the receiver and transmitter before the frequency is changed. The receiver in some embodiments scans each channel, and upon finding a signal on a channel evaluates the signal rapidly to determine whether data found on the channel is a preamble identifying a desired receiver or radio network.

The receiver will also desirably be able to recognize that received bits are not a part of the desired preamble quickly, so that the scanning process may proceed to the next channel. Further, the amount of computation needed to make this determination is desirably low, so that processing overhead or delay is minimized in finding and locking on to a channel carrying a transmission of the desired preamble pattern.

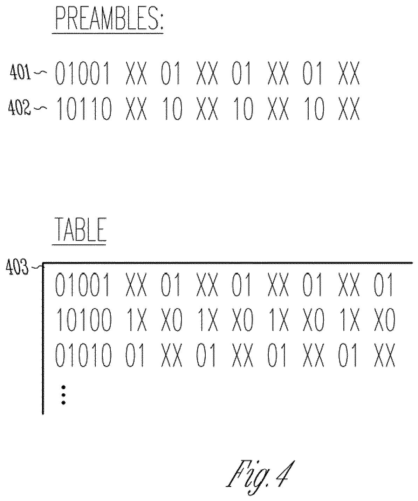

Figure 4 shows a method of evaluating received data to determine if it is the preamble of a desired receiver or network, consistent with an example embodiment of the invention. In this example, the receiver is scanning for two different preamble patterns, including one preamble pattern identifying the receiver as the intended recipient and another identifying that the transmitter is broadcasting a message within the radio network.

The preamble in this example comprises a 19-bit pattern, repeated 38 times over the course of the preamble transmission. The 19-bit preamble comprises 8 bits of data embedded in a longer pattern designed to limit the number of sequential bits having the same data element to three bits, similar in concept to Manchester coding but in this example allowing a run length of three sequential same bits.

Looking at the example 19-bit preamble at 401, eight bits of data can be encoded in the bit positions marked by an "x", while the remaining bits are fixed and ensure at most a run length of three sequential bits that are the same. The example preamble pattern given here is also configured such that the first five bits of the preamble cannot occur as a pattern later within the preamble, enabling the receiver to easily determine when a 19-bit preamble sequence starts and ends.

A second preamble example is shown at 402, which similar to preamble 401 can encode eight bits of data such as channel information within the preamble in bit positions marked with an "x", and will have at the most three sequential bits of data that have the same value. The second preamble 402 is also configured such that the first five bits cannot occur anywhere within the 19-bit sequence other than in the first five bits, and are further configured that these first five bits cannot occur anywhere within the other preamble shown at 401. In further embodiments, a greater number of preambles that are orthogonal to one another are used, such as to identify the intended receiver.

Use of preamble patterns such as those shown at 401 and 402 enable the receiver to rapidly determine whether the received data is part of a valid preamble, as the receiver can reject signals that don't contain valid preambles based on bit timing, an observed sequence having more than three bits of the same value, or that lack a predetermined combination of bits such as those not marked with an "x" in the example preambles shown at 401 and 402.

In a further example, bit patterns such as those shown at 401 and 402 are selected to maximize bit transitions, such as to not have more than three consecutive bits of the same value in the first five bits of the preamble pattern. This allows the receiver to more rapidly and accurately recover clock or timing information from the bit stream, and more quickly evaluate a received signal.

In a more detailed example, the receiving radio is scanning available channels and looking for one of two preambles, such as those at 401 and 402. One preamble is identified as a broadcast message, and the other preamble as being addressed to the receiver. The receiver is able to quickly and accurately identify an incoming preamble by looking for one of the two bit sequences shown at 401 and 402 in a series of received bits, and moving on to the next channel if a signal does not contain a desired preamble.

Evaluating the received bits in the receiver is performed in a more detailed example by copying each of the two 19-bit preambles into a table 19 times, bit shifted by one bit for each table entry, as shown at 403. The resulting table of 38 entries can then be directly compared against an incoming bit stream, such that as soon as the incoming bits do not match at least one of the table entries it is known that the incoming signal does not contain a desired preamble. The table in a further example is sorted, so that only a portion of the table matching the previous received bits need be scanned for newly received bits..

Because there are only 38 table entries, the first six or seven bits of received data can exclude most typical received signals not containing a desired preamble from further evaluation, such that the receiver can move on to the next channel and continue the search for a transmitter. Each additional bit received that matches a preamble table entry improves the odds that a valid preamble is being received, such that very few invalid bit sequences will be evaluated past ten bits, allowing the radio to progress to scanning the next channel before an entire 19-bit sequence is received.

The scanning process can further use the position of the first five bits of the preamble in a received bitstream to synchronize the receiver to the beginning of a word of data, knowing that the preamble is 19 bits long and starts with a five bit pattern that is not repeated in any other valid preamble.

Comparison is implemented in some embodiments using hardware or software methods such as combinational logic or a programmed processor, such as a 32-bit processor. In one such 32-bit processor embodiment, the 19-bit preambles are buffered with zeros to fill 32-bit words for comparison, along with masking bit positions of bits not yet received or not known in both the lookup table and received data to ensure that matches are based only on the bits received and known to be a part of the preamble. Extra bits may simply be filled with zeros in a more detailed embodiment, while data in bit positions marked with an x in the examples at 401 and 402 may be similarly replaced with zeros, or otherwise masked from comparison as the values of the data received in these bit positions may not be known. As additional bits are received, only table entries matching previous comparisons need be evaluated, reducing the amount of time needed to evaluate the received data against the table of preamble bit patterns. A variety of other lookup and matching methods are also suitable, and are within the scope of various embodiments of the invention.

The examples presented here illustrate how a frequency agile radio can employ listen-before-talk, such as by transmitting a preamble longer than a period needed for a receiver to scan all available channels. Although specific embodiments have been illustrated and described herein, it will be appreciated by those of ordinary skill in the art that any arrangement which is calculated to achieve the same purpose may be substituted for the specific embodiments shown. The invention may be implemented in various modules and in hardware, software, and various combinations thereof, and any combination of the features described in the examples presented herein is explicitly contemplated as an additional example embodiment. This application is intended to cover any adaptations or variations of the example embodiments of the invention described herein. It is intended that this invention be limited only by the claims.

## Claims

1. A method of operating a frequency-agile radio system comprising a transmitter and a receiver, the method comprising:
selecting a frequency channel in the transmitter from among multiple frequency channels available to the transmitter and to the receiver;
listening in the transmitter to ensure that the selected channel is unused before transmitting;
sending (302) from the transmitter on the selected channel, a preamble (202) longer in time than a receiver scan time during which the receiver is operable to scan all frequency channels available to the transmitter and receiver and receive the preamble on the selected channel without prior knowledge of the selected frequency channel;
scanning (301) at the receiver for two different preamble patterns through the available frequency channels, wherein a first preamble pattern identifies the receiver as a recipient and a second preamble pattern identifies that the transmitter broadcasted a message within a radio network;
finding (305) the preamble (202) on a channel in the receiver; and
locking (306) the receiver on to the channel on which the preamble was found.

2. The method of operating a frequency-agile radio system of claim 1, wherein the preamble identifies the transmitter as broadcasting to a specific network or addressing a specific receiver or receivers.

3. The method of operating a frequency-agile radio system of claim 1, wherein the preamble is encoded to limit the number of sequential bits of the same value.

4. The method of operating a frequency-agile radio system of claim 1, wherein the preamble comprises a bit sequence such that the bit sequence is not found elsewhere in another valid preamble.

5. The method of operating a frequency-agile radio system of claim 1, wherein finding the preamble comprises matching received data to a table of possible preamble bit sequences, and scanning a next frequency channel once no received matching preamble is possible.

6. The method of operating a frequency-agile radio system of claim 1, wherein finding the preamble comprises recognizing a valid preamble from among two or more valid preambles.

7. A frequency-agile radio system, comprising:
a radio frequency transmitter; and
a radio frequency receiver; wherein the radio frequency transmitter comprises:
a transmitter radio that selects a frequency channel from among multiple frequency channels available to the radio frequency transmitter and to the radio frequency receiver;
wherein the transmitter radio listens to ensure that the selected channel is unused before transmitting; and
wherein the transmitter radio sends (302) on the selected channel, a preamble (202) longer in time than a receiver scan time during which the receiver is operable to scan all frequency channels available to the transmitter and receiver and receive the preamble on the selected channel without prior knowledge of the selected frequency channel;
wherein the radio frequency receiver comprises:
a receiver radio that scans through multiple frequency channels available to the radio frequency transmitter and the radio frequency receiver for two different preamble patterns, wherein a first preamble pattern identifies the receiver as an intended recipient and a second preamble pattern identifies that the transmitter broadcasted a message within a radio network;
wherein the radio finds the preamble on a channel and locks on to the channel on which the preamble was found.

8. The frequency-agile radio system of claim 7, wherein the preamble is encoded to limit the number of sequential bits of the same value.

9. The frequency-agile radio system of claim 7, wherein the preamble comprises a bit sequence such that the bit sequence is not found elsewhere in another valid preamble.

## Patentansprüche

1. Verfahren zum Betreiben eines frequenzagilen Funksystems, das einen Sender und einen Empfänger umfasst, wobei das Verfahren Folgendes umfasst:
Auswählen eines Frequenzkanals in dem Sender aus mehreren Frequenzkanälen, die dem Sender und dem Empfänger zur Verfügung stehen;
Abhören in dem Sender, um sicherzustellen, dass der ausgewählte Kanal vor einem Senden nicht verwendet wird;
Übertragen (302) aus dem Sender auf dem ausgewählten Kanal einer Präambel (202), die länger als eine Empfängerabtastzeit ist, während der der Empfänger betriebsfähig ist, um die gesamten Frequenzkanäle, die dem Sender und dem Empfänger zur Verfügung stehen, abzutasten und die Präambel auf dem ausgewählten Kanal ohne vorherige Kenntnis des ausgewählten Frequenzkanals zu empfangen;
Abtasten (301) an dem Empfänger nach zwei verschiedenen Präambelmustern durch die verfügbaren Frequenzkanäle, wobei ein erstes Präambelmuster den Empfänger als einen Empfänger identifiziert, und ein zweites Präambelmuster identifiziert, dass der Sender eine Nachricht innerhalb eines Funknetzwerks ausgestrahlt hat;
Finden (305) der Präambel (202) auf einem Kanal in dem Empfänger; und
Aufschalten (306) des Empfängers auf den Kanal, auf dem die Präambel gefunden wurde.

2. Verfahren zum Betreiben eines frequenzagilen Funksystems nach Anspruch 1, wobei die Präambel den Sender als an ein bestimmtes Netzwerk ausstrahlend oder einen bestimmten Empfänger oder bestimmte Empfänger adressierend identifiziert.

3. Verfahren zum Betreiben eines frequenzagilen Funksystems nach Anspruch 1, wobei die Präambel codiert ist, um die Anzahl von aufeinanderfolgenden Bits mit dem gleichen Wert zu begrenzen.

4. Verfahren zum Betreiben eines frequenzagilen Funksystems nach Anspruch 1, wobei die Präambel eine Bitfolge derart umfasst, dass die Bitsequenz nicht an anderer Stelle in einer anderen gültigen Präambel gefunden wird.

5. Verfahren zum Betreiben eines frequenzagilen Funksystems nach Anspruch 1, wobei das Finden der Präambel ein Anpassen empfangener Daten an eine Tabelle möglicher Präambelbitsequenzen und das Abtasten eines nächsten Frequenzkanals umfasst, sobald keine empfangene passende Präambel möglich ist.

6. Verfahren zum Betreiben eines frequenzagilen Funksystems nach Anspruch 1, wobei das Finden der Präambel ein Erkennen einer gültigen Präambel aus zwei oder mehr gültigen Präambeln umfasst.

7. Frequenzagiles Funksystem, das Folgendes umfasst:
einen Hochfrequenzsender; und
einen Hochfrequenzempfänger;
wobei der Hochfrequenzsender Folgendes umfasst:
ein Senderfunkgerät, das einen Frequenzkanal aus mehreren Frequenzkanälen auswählt, die dem Hochfrequenzsender und dem Hochfrequenzempfänger zur Verfügung stehen;
wobei das Senderfunkgerät abhört, um sicherzustellen, dass der ausgewählte Kanal vor dem Senden nicht verwendet wird; und
wobei das Senderfunkgerät (302) auf dem ausgewählten Kanal eine Präambel (202) überträgt, die länger als eine Empfängerabtastzeit ist, während der der Empfänger betriebsfähig ist, um die gesamten Frequenzkanäle, die dem Sender und dem Empfänger zur Verfügung stehen, abzutasten und die Präambel auf dem ausgewählten Kanal ohne vorherige Kenntnis des ausgewählten Frequenzkanals zu empfangen;
wobei der Hochfrequenzempfänger Folgendes umfasst:
ein Empfängerfunkgerät, das mehrere Frequenzkanäle, die dem Hochfrequenzsender und dem Hochfrequenzempfänger zur Verfügung stehen, nach zwei verschiedenen Präambelmustern abtastet, wobei ein erstes Präambelmuster den Empfänger als beabsichtigten Empfänger identifiziert und ein zweites Präambelmuster identifiziert, dass der Sender eine Nachricht innerhalb eines Funknetzes ausgestrahlt hat;
wobei das Funkgerät die Präambel auf einem Kanal findet und auf den Kanal aufschaltet, auf dem die Präambel gefunden wurde.

8. Frequenzagiles Funksystem nach Anspruch 7, wobei die Präambel codiert ist, um die Anzahl von aufeinanderfolgenden Bits mit dem gleichen Wert zu begrenzen.

9. Frequenzagiles Funksystem nach Anspruch 7, wobei die Präambel eine Bitfolge derart umfasst, dass die Bitfolge nicht an anderer Stelle in einer anderen gültigen Präambel gefunden wird.

## Revendications

1. Procédé de fonctionnement d'un système radioélectrique agile en fréquence comprenant un émetteur et un récepteur, le procédé comprenant :
la sélection d'un canal de fréquence dans l'émetteur parmi plusieurs canaux de fréquence disponibles pour l'émetteur et pour le récepteur ;
l'écoute dans l'émetteur pour s'assurer que le canal sélectionné n'est pas utilisé avant d'émettre ;
l'envoi (302) à partir de l'émetteur sur le canal sélectionné, d'un préambule (202) plus long qu'un temps de balayage du récepteur pendant lequel le récepteur peut fonctionner pour balayer tous les canaux de fréquence disponibles pour l'émetteur et le récepteur et pour recevoir le préambule sur le canal sélectionné sans connaissance préalable du canal de fréquence sélectionné ;
le balayage (301) au niveau du récepteur de deux préambules de synchronisation différents à travers les canaux de fréquence disponibles, un premier préambule de synchronisation identifiant le récepteur en tant que destinataire et un second préambule de synchronisation identifiant que l'émetteur a diffusé un message dans un réseau radio ;
la recherche (305) du préambule (202) sur un canal dans le récepteur ; et
le verrouillage (306) du récepteur sur le canal sur lequel le préambule a été trouvé.

2. Procédé de fonctionnement d'un système radioélectrique agile en fréquence selon la revendication 1, le préambule identifiant l'émetteur comme diffusant vers un réseau spécifique ou s'adressant à un ou des récepteurs spécifiques.

3. Procédé de fonctionnement d'un système radioélectrique agile en fréquence selon la revendication 1, le préambule étant codé pour limiter le nombre de bits séquentiels de la même valeur.

4. Procédé de fonctionnement d'un système radioélectrique agile en fréquence selon la revendication 1, le préambule comprenant une séquence de bits telle que la séquence de bits ne se trouve pas ailleurs dans un autre préambule valide.

5. Procédé de fonctionnement d'un système radioélectrique agile en fréquence selon la revendication 1, la recherche du préambule consistant à adapter des données reçues à un tableau de séquences de bits de préambule possible, et à balayer un canal de fréquence suivant une fois qu'aucun préambule d'adaptation reçu n'est possible.

6. Procédé de fonctionnement d'un système radioélectrique agile en fréquence selon la revendication 1, la recherche du préambule consistant à reconnaître un préambule valide parmi deux préambules valides ou plus.

7. Système radioélectrique agile en fréquence, comprenant :
un émetteur de radiofréquence ; et
un récepteur de radiofréquence ;
l'émetteur de radiofréquence comprenant :
un émetteur radio qui sélectionne un canal de fréquence parmi plusieurs canaux de fréquence disponibles pour l'émetteur de radiofréquence et pour le récepteur de radiofréquence ;
l'émetteur radio écoutant pour s'assurer que le canal sélectionné n'est pas utilisé avant d'émettre ; et
l'émetteur radio envoyant (302) sur le canal sélectionné, un préambule (202) plus long dans le temps qu'un temps de balayage du récepteur pendant lequel le récepteur peut fonctionner pour balayer tous les canaux de fréquence disponibles pour l'émetteur et pour le récepteur et recevoir le préambule sur le canal sélectionné sans connaissance préalable du canal de fréquence sélectionné ;
le récepteur de radiofréquence comprenant :
un récepteur radio qui balaye à travers plusieurs canaux de fréquence disponibles pour l'émetteur de radiofréquence et le récepteur de radiofréquence pour deux préambules de synchronisation différents, un premier préambule de synchronisation identifie le récepteur comme un destinataire prévu et un second préambule de synchronisation identifie que l'émetteur a diffusé un message dans un réseau radio ;
la radio trouvant le préambule sur un canal et se verrouillant sur le canal sur lequel le préambule a été trouvé.

8. Système radioélectrique agile en fréquence selon la revendication 7, le préambule étant codé pour limiter le nombre de bits séquentiels de la même valeur.

9. Système radioélectrique agile en fréquence selon la revendication 7, le préambule comprenant une séquence de bits de telle sorte que la séquence de bits ne se trouve pas ailleurs dans un autre préambule valide.
